Europäisches Patentamt

European Patent Office

Office européen des brevets

(19)

(11) Veröffentlichungsnummer : **0 021 001**
**B1**

(12)    **EUROPÄISCHE PATENTSCHRIFT**

(45) Veröffentlichungstag der Patentschrift :
**11.08.82**

(21) Anmeldenummer : **80102666.7**

(22) Anmeldetag : **13.05.80**

(51) Int. Cl.³ : **B 60 T   8/18**

(54) **Automatisch-lastabhängiger Bremskraftregler.**

(30) Priorität : **20.06.79 DE 2924836**

(43) Veröffentlichungstag der Anmeldung :
**07.01.81 (Patentblatt 81/01)**

(45) Bekanntmachung des Hinweises auf die Patenterteilung : **11.08.82 Patentblatt 82/32**

(84) Benannte Vertragsstaaten :
**AT DE FR GB IT NL**

(56) Entgegenhaltungen :
**DE A 2 457 008**
**US A 4 077 676**

(73) Patentinhaber : **Wabco Fahrzeugbremsen GmbH**
**Am Lindener Hafen 21 Postfach 91 12 80**
**D-3000 Hannover 91 (DE)**

(72) Erfinder : **Fauck, Gerhard**
**Tiergartenstrasse 156**
**D-3000 Hannover 71 (DE)**

(74) Vertreter : **Schrödter, Manfred**
**Wabco Fahrzeugbremsen GmbH Am Lindener Hafen**
**21**
**D-3000 Hannover 91 (DE)**

Automatisch-lastabhängiger Bremskraftregler

Die Erfindung betrifft einen automatisch-lastabhängigen Bremskraftregler für druckmittelbetätigte Fahrzeugbremsanlagen gemäß dem Oberbegriff des Anspruchs 1.

Ein derartiger Bremskraftregler ist aus der DE-A-24 57 008 bekanntgeworden.

Fahrzeuge, deren automatisch-lastabhängige Bremskraftregelung nur durch eine Regelung der Hinterachse vollzogen wird, können unter bestimmten Voraussetzungen beim Bremsen an der Vorderachse blockieren. Dies ist der Fall, wenn die Hinterachsbremszylinder bei der Bremsung eines voll oder teilweise beladenen Fahrzeuges mit dem entsprechend der Hinterachslast geregelten niedrigen Bremsdruck beaufschlagt werden, während in die Bremszylinder der ungeregelten Vorderachse der volle Bremsdruck eingesteuert wird.

Als Gegenmaßnahme wurde ein Bremskraftregler mit Vorsteuerung entwickelt, d. h. dieser Bremskraftregler wurde so ausgelegt, daß in der Anfangsphase des Bremsvorganges bzw. bei leichten Bremsungen noch keine lastabhängige Regelung der Hinterachse stattfindet, sondern daß diese Regelung erst bei einem bestimmten Bremsdruck beginnt. Mit dieser Maßnahme wurde auch einem schnellen Verschleiß der Bremsbeläge der Vorderräder entgegengewirkt.

Da die Vorsteuerphase der Bremskraftregler bereits werkseitig eingestellt ist, ergibt sich der Nachteil, daß eine nachträgliche Einstellung dieser Phase, beispielsweise zur eventuellen Anpassung an geänderte Einsatzbedingungen des Fahrzeugs nicht möglich ist oder nur durch Austausch von Bauteilen nach einer Demontage der Geräte durchgeführt werden kann.

Aus diesem Grunde ist in der nicht vorveröffentlichten DE-A-29 17 936 ein automatisch-lastabhängiger Bremskraftregler vorgeschlagen und beschrieben, bei dem die Vorsteuerphase auf einfache Weise, insbesondere ohne Demontage des Gerätes verstellt werden kann.

Zur Erzielung des vorstehend erwähnten Vorteils ist in der erwähnten DE-A-29 17 936 ein Bremskraftregler mit folgenden Merkmalen vorgeschlagen :

a) es ist ein Eingang für den Bremssteuerdruck vorgesehen ;

b) es ist ein Ausgang für den Bremsdruck vorgesehen ;

c) zwischen Eingang und Ausgang ist ein Doppelventil mit Einlaß- und Auslaßventil vorgesehen ;

d) ein erster Kolben ist zur Betätigung des Doppelventils vorgesehen ;

e) der erste Kolben ist vom Bremsdruck in Schließrichtung des Einlaßventils beaufschlagbar ;

f) es ist ein zweiter Kolben vorgesehen, der vom Bremssteuerdruck beaufschlagbar ist ;

g) der erste und der zweite Kolben sind über ein Hebelsystem nach dem Prinzip des Waagebalkens untereinander verbunden ;

h) das Hebelsystem enthält zwei Hebel, die über ein lastabhängig verschiebbares und die wirksame Hebellänge der Hebel bestimmendes Druckstück in kraftschlüssiger Verbindung stehen ;

i) es ist eine an wenigstens einem der Hebel angreifende Feder vorgesehen, deren Federkraft verstellbar ist ;

k) die Feder ist so angeordnet, daß ihre Federkraft auf den ersten Kolben wirkt.

Bei diesem Bremskraftregler ist eine von außen zugängliche Verstellmöglichkeit der Vorsteuerphase bzw. des Knickpunktes geschaffen worden, welche ohne Demontage und ohne Ausbau des Gerätes aus dem Fahrzeug zugänglich ist.

Es hat sich jedoch die Möglichkeit herausgestellt, daß mit den vorerwähnten Bremskraftreglern ausgerüstete Fahrzeuge, je nach Einstellung der Vorsteuerphase, deren lastabhängiger Regelbeginn von der Bauart des Fahrzeuges bzw. von dessen Einsatzbedingungen abhängig ist, nicht den Vorschriften des Gesetzgebers entsprechen.

In den Richtlinien zur Angleichung der Rechtsvorschriften der Mitgliedstaaten der Europäischen Wirtschaftsgemeinschaft über Bremsanlagen von Kraftfahrzeugen und deren Anhänger wurden Vorschriften erlassen, welche die Kennlinien innerhalb bestimmter Abbremsungsbereiche in sogenannten Auslegebändern festlegen, d. h. die Bremsanlagen müssen so beschaffen sein, daß die Kennlinien der Abbremsung für die einzelnen Fahrzeugachsen in Abhängigkeit vom Druck in der Bremsleitung innerhalb des Bereiches der Auslegebänder liegen.

Die Einhaltung dieser Vorschriften ist vor allem dann schwierig, wenn die Vorsteuerphase lang, d. h. wenn die Spannung der an einem der beiden Hebel angreifenden Feder verhältnismäßig groß ist und die lastabhängige Bremskraftregelung erst bei einem entsprechend hohen Bremssteuerdruck einsetzt, was zur Folge hat, daß der Regelbereich klein wird.

Der Erfindung liegt deshalb die Aufgabe zugrunde, den eingangs erwähnten Bremskraftregler so zu verbessern, daß dessen lastabhängige Regelungsfunktion der Bremswirkung auf breiter Basis allen Fahrzeug-Bauarten und deren Einsatzbedingungen entsprechend den vorerwähnten Richtlinien gerecht wird.

Diese Aufgabe wird durch die im Patentanspruch 1 aufgeführte Erfindung gelöst.

Die Lösung wirkt sich in zweifacher Hinsicht vorteilhaft aus, da einerseits eine hundertprozentige Ausnutzung der in der DE-A-29 17 936 vorgeschlagenen Einstellmöglichkeit der Vorsteuerstufe ohne Rücksicht auf den Regelbereich gegeben ist und andererseits dieser Regelbereich den Einsatzbedingungen des Fahrzeugs entsprechend gewählt werden kann.

Vorteilhafte Weiterbildungen und Ausgestaltungen der Erfindung sind den Unteransprüchen zu entnehmen, wobei die Unteransprüche 3 und 7 eine Ausgestaltung aufzeigen, bei welcher durch eine Umkehr der Beaufschlagungsrichtung die Spannkraft der Feder erhöht wird. Eine derartige Anordnung könnte bei Spezialfahrzeugen Verwendung finden, deren Einsatz unter extremen Bedingungen stehen.

Die Erfindung soll nun anhand eines Ausführungsbeispiels, das in der Zeichnung dargestellt ist, näher erläutert werden.

Es zeigen :

Figur 1 einen automatisch-lastabhängigen, mit Druckmittel gesteuerten Bremskraftregler, dessen Vorsteuerstufe mechanisch einstellbar und dessen Regelbereich vom Bremssteuerdruck abhängig ist,

Figur 2 einen Teilausschnitt der mechanischen Einstelleinrichtung entsprechend der in den Unteransprüchen 3 und 7 aufgezeigten Ausgestaltung,

Figur 3 eine graphische Darstellung mit den verschiedenen Kennlinien, wobei der in die Bremszylinder eingesteuerte Druck $P_2$ in Abhängigkeit des vom Bremsventil ausgesteuerten Druckes $P_1$ dargestellt ist.

Im Gehäuse 1 ist ein Steuerkolben 2 angeordnet, dessen obere Kammer 3 mit der Atmosphäre verbunden ist. Unterhalb des Steuerkolbens 2 befindet sich eine Bremsdrucksteuerkammer 4, die über einen Anschluß 5 mit einem nicht dargestellten Bremsventil in Verbindung steht. Ein Doppelventilkörper 6 bildet mit einem gehäusefesten Ventilsitz 7 ein in eine Bremsdruckkammer 8 öffnendes Einlaßventil 6, 7 und mit einem Ventilsitz 9 ein in die Atmosphäre entlüftendes Auslaßventil 6, 9. In die Bremsdruckkammer 8 mündet ein zu nichtdargestellten Bremszylindern führender Anschluß 10. Der Steuerkolben 2 ist mit einer Kolbenstange 11 verbunden, die durch den Ventilkörper 6 abdichtend hindurchgeht und die in einen Kolben 12 hineinragt.

Am unteren Ende der Kolbenstange 11 ist eine Gabel 13 befestigt, an deren unterem Ende mittels eines Bolzens 14 ein Hebel 15 angelenkt ist, der außerdem auf einem im Gehäuse 1 befestigten Bolzen 16 schwenkbar ist. Der Hebel 15 bildet zusammen mit einem an seiner Oberseite angeordneten, als Rolle ausgebildeten Stützkörper 17 und einem Hebel 18, der auf einem im Gehäuse 1 befestigten Bolzen 19 schwenkbar ist, eine Übersetzungseinrichtung für die am Steuerkolben 2 und Kolben 12 entstehenden Kräfte. Der Kolben 12 liegt mit seinem unteren Ende auf der Oberseite des Hebels 18 auf, während sein oberes Ende den Auslaßventilsitz 9 trägt. Eine Ringkammer 20 über dem Kolben 12 steht mittels Bohrung 21 mit der Bremsdruckkammer 8 in Verbindung.

Eine Kammer 22 unterhalb des Kolbens 12 ist über ein Entlüftungsventil 23 stets mit der Atmosphäre verbunden. Eine Druckfeder 24 verbindet den Kolben 12 mit der Kolbenstange 11 des Steuerkolbens 2.

Der Abstützkörper 17 ist in eine Halterung 25 mit einem Führungsansatz 26 geführt. Mit der Halterung 25 steht eine Kolbenstange 27 eines Kolbens 28 in Verbindung, in dessen Kammer 29 über den Anschluß 30 ein unter lastabhängigem Druck stehendes aus den nicht dargestellten Luftfederbälgen eingesteuertes Druckmittel auf die Ringfläche 31 des Kolbens 28 wirksam ist.

Der Führungsansatz 26 ragt in das Gehäuse verschiebbar hinein. Innerhalb des Führungsansatzes 26 ist zwischen Halterung 25 und einer Verschlußscheibe eine Einstellfeder 32 vorgespannt angeordnet.

Die Funktion des automatisch-lastabhängigen Bremskraftreglers ist wie folgt :

Die bei einer Bremsung vom Bremsventil in die Bremsdrucksteuerkammer 4 eingesteuerte Druckluft gelangt am geöffneten Einlaß 6, 7 vorbei in die Bremsdruckkammer 8 und weiter in die daran angeschlossenen Bremszylinder. Gleichzeitig hebt sie den Kolben 2 an, der seine Bewegung über die Kolbenstange 11 mit der daran befestigten Gabel 13 und den daran mittels Bolzen 14 angelenkten Hebel 15 auf den Abstützkörper 17 und den Hebel 18 überträgt. Außerdem dringt Druckluft durch die Bohrung 21 in die Ringkammer 20 oberhalb des Kolbens 12 ein und drückt diesen auf den Hebel 18.

Von der Stellung des Abstützkörpers 17, die von der durch die Luftfederbalgdrücke über den Anschluß 30 gesteuerte Bewegung des Steuerkolbens 28 bestimmt ist, hängt es nun ab, wann der Kolben 12 in der Lage ist, die Gegenkraft des vom Kolben 2 gesteuerten Hebels 15 zu überwinden. Sobald dies der Fall ist, bewegt sich der Kolben 12 nach unten. Der nachfolgende Ventilkörper 6 verschließt den Einlaß 6, 7.

Bei teilweiser Aufhebung der Bremsung wird die Bremsdrucksteuerkammer 4 über das Bremsventil teilweise entlüftet. Dadurch wird das Kraftgleichgewicht am Kolben 12 gestört. Der Druck in Kammer 20 überwiegt und bewegt den Kolben 12 nach unten ; dabei wird das Auslaßventil 6, 9 solange geöffnet, bis sich ein neuer Gleichgewichtszustand eingestellt hat. Bei weiterer Druckabsenkung in Kammer 4 vollzieht sich der Entlüftungsvorgang in gleicher Weise, bis der Druck in beiden Kammern 4 und 20 bis auf 0 bar abgesenkt ist. Ein Rückschlagventil (auf der Zeichnung nicht dargestellt) sorgt dafür, daß am Anschluß 10 kein Restdruck bleibt, wenn Anschluß 5 auf 0 bar abgesenkt ist.

Falls der Bremsdruck nicht mehr vorhanden ist, so wird dementsprechend der Kolben 2 entlastet. Seine gegen den Abwärtsdruck des Kolbens 12 wirkende Kraft geht verloren, worauf der Kolben 12 von dem noch vorhandenen Druck in Kammer 20 weiter nach unten bewegt wird. Dadurch bewegt sich Auslaß 6, 9, und die Bremszylinder werden durch eine Bohrung im Kolben 12 und über die Entlüftung 23 entlüftet. Da auch die Kammer 20 drucklos wird, geht der federbelastete Kolben 12 wieder nach oben, hebt den Ventilkörper 6 an und öffnet so den Einlaß 6, 7.

Der Bremskraftregler befindet sich wieder in der ursprünglichen Lösestellung.

Entsprechend der DE-A-29 17 936 ist an den einen Hebel 18 ein Zugbolzen 33a angelenkt, welcher durch eine Ausbildung 34a des Gehäuses nach außen geführt ist. Eine in der Ausbildung 34a angeordnete Feder 35a, deren Innendurchmesser von dem Zugbolzen 33a durchdrungen wird, stützt sich an ihrem oberen Ende statt auf einer Scheibe nunmehr auf einen Hilfskolben 36a ab, dessen Höhe und somit die auf den Hebel 18 übertragene Federspannung mittels einer Schraube 37a einstellbar ist.

Der Hilfskolben 36a ist mit einer Ringfläche 38 versehen, welche einer von der Gehäuseausbildung 34a und dem Hilfskolben 36a gebildeten Ringkammer 39 zugeordnet ist. Die Ringkammer 39 steht über eine Verbindung 40 mit der Bremsdrucksteuerkammer 4 in Verbindung.

Die mittels Mutter 37a eingestellte Spannung der Feder 35a, welche sich über den Zugbolzen 33a auf den Hebel 18 überträgt, wird durch die Beaufschlagung der Ringfläche 38 mit dem Druck $P_1$ je nach der Höhe dieses Druckes $P_1$ innerhalb des Regelbereiches mehr oder weniger stark entlastet.

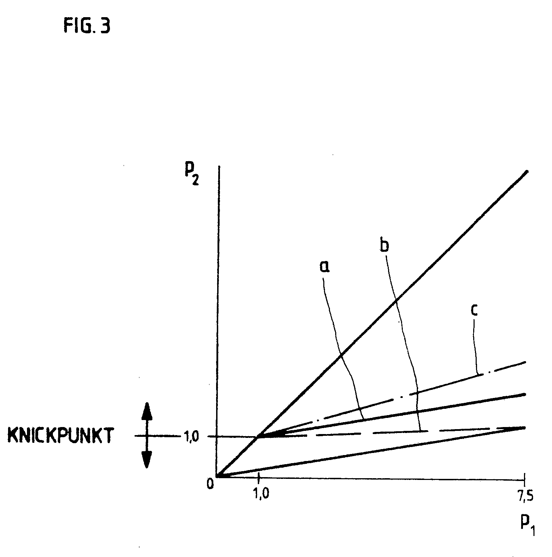

Es ergibt sich eine in Figur 3 dargestellte geringere Steigung der Kennlinie b gegenüber der Steigung der Kennlinie a, welche die Druckverhältnisse nach der DE-A-29 17 936 darstellt.

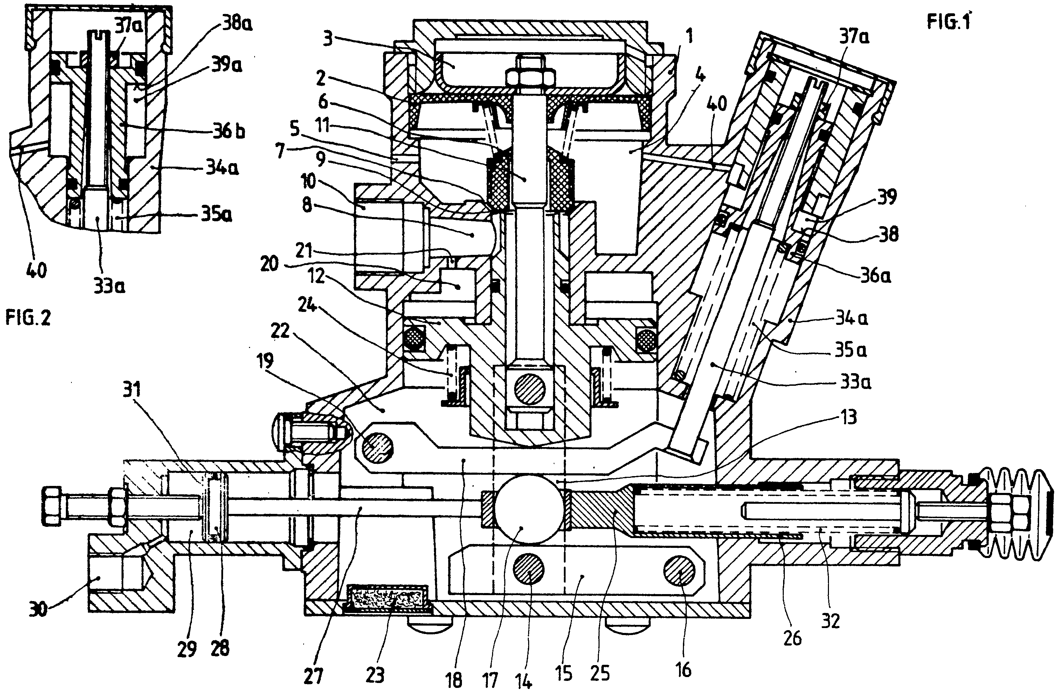

Die Kennlinie c stellt die Druckverhältnisse dar, welche sich ergeben, wenn die Ringfläche 38a des Hilfskolbens 36b entsprechend Figur 2 in entgegengesetzter Richtung zur Ringfläche 38 des Hilfskolbens 36a entsprechend Figur 1 wirkt.

**Ansprüche**

1. Automatisch-lastabhängiger Bremskraftregler für druckmittelbetätigte Fahrzeugbremsanlagen, der folgende Merkmale umfaßt :

a) es ist ein Eingang (5) für den Bremsteuerdruck vorgesehen ;

b) es ist ein Ausgang (10) für den Bremsdruck vorgesehen ;

c) zwischen Eingang (5) und Ausgang (10) ist eine Bremsdrucksteuerkammer (4), ein Doppelventil mit Einlaß- und Auslaßventil (6, 7 und 6, 9) und eine Bremsdruckkammer (8) vorgesehen ;

d) ein ersten Kolben (12) ist zur Betätigung des Doppelventils (6, 7 und 6, 9) vorgesehen ;

e) der erste Kolben (12) ist vom Bremsdruck in Schließrichtung des Einlaßventils (6, 7) beaufschlagbar ;

f) es ist ein zweiter Kolben (2) vorgesehen, der vom Bremssteuerdruck beaufschlagbar ist ;

g) der erste und der zweite Kolben (12 und 2) sind über ein Hebelsystem nach dem Prinzip des Waagebalkens untereinander verbunden ;

h) das Hebelsystem enthält zwei Hebel (15 und 18), die über ein lastabhängig verschiebbares und die wirksame Hebellänge der Hebel bestimmendes Druckstück (17) in kraftschlüssiger Verbindung stehen ;

gekennzeichnet durch folgende Merkmale :

i) es ist eine an wenigstens einen der Hebel (15 oder 18) angreifende Feder (35a) vorgesehen, deren Federkraft verstellbar ist ;

k) die Feder (35a) ist so angeordnet, daß ihre Federkraft auf den ersten Kolben (12) wirkt,

l) es sind Mittel zur Einstellung der am Hebel (15 oder 18) wirksam werdenden Federkraft der Feder (35a) in Abhängigkeit vom Bremssteuerdruck vorgesehen ;

m) die Mittel bestehen aus einem vom Bremssteuerdruck beaufschlagbaren Hilfskolben (36a, 36b).

2. Automatisch-lastabhängiger Bremskraftregler nach Anspruch 1, gekennzeichnet durch folgendes Merkmal : Der Bremssteuerdruck wirkt der Federkraft der Feder (35a) entgegen.

3. Automatisch-lastabhängiger Bremskraftregler nach Anspruch 1, gekennzeichnet durch folgendes Merkmal : Der Bremssteuerdruck wirkt in derselben Richtung wie die Federkraft der Feder (35a).

4. Automatisch-lastabhängiger Bremskraftregler nach Ansprüchen 1, 2 oder 3, gekennzeichnet durch folgendes Merkmal : Der Hilfskolben (36a, 36b) bildet eine mittels einer Einstellschraube (37a) verstellbare Abstützung der Feder (35a).

5. Automatisch-lastabhängiger Bremskraftregler nach wenigstens einem der Ansprüche 1 bis 4, gekennzeichnet durch folgendes Merkmal : Der Hilfskolben (36a, 36b) ist an seinem Außendurchmesser mit einer Ringfläche (38 bzw. 38a) versehen.

6. Automatisch-lastabhängiger Bremskraftregler nach Anspruch 5, gekennzeichnet durch folgendes Merkmal : Die Ringfläche (38) bildet die untere Fläche einer zwischen dem Hilfskolben (36a) und dem Gehäuse (34a) angeordneten Ringkammer (39).

7. Automatisch-lastabhängiger Bremskraftregler nach Anspruch 5, gekennzeichnet durch folgendes Merkmal : Die Ringfläche (38a) bildet die obere Fläche eines in dem Kolben (36b) und dem Gehäuse (34a) angeordneten Ringkammer (39a).

8. Automatisch-lastabhängiger Bremskraftregler nach wenigstens einem der Ansprüche 1 bis 7, gekennzeichnet durch folgendes Merkmal : Die Ringkammer (39, 39a) ist mit der Bremsdrucksteuerkammer (4) verbunden.

**Claims**

1. Automatic load-controlled brake force regulator for pressure medium-operated vehicle brake systems which includes the following features :

a) an inlet (5) for the brake control pressure is provided ;

b) an outlet (10) for the brake pressure is provided ;

c) between inlet (5) and outlet (10) there is provided a brake pressure control chamber (4), a double valve having an inlet and outlet valve (6, 7 and 6, 9) and a brake pressure chamber (8) ;

d) a first piston (12) is provided for the actuation of the double valve (6, 7 and 6, 9) ;

e) the first piston (12) can be loaded by the brake pressure in the closing direction of the inlet valve (6, 7) ;

f) a second piston (2) is provided which can be loaded by brake control pressure ;

g) the first and the second piston (12 and 2) are mutually connected by means of a system of levers according to the principle of the balance beam ;

h) the system of levers contains two levers (15 and 18) which are in non-positive connection by way of a thrust piece (17) which may be moved in dependence on the load and which determines the effective lever length of the levers, characterised by the following features :

i) a spring (35a) acting upon at least one of the levers (15 or 18) is provided, the spring power of which is adjustable ;

k) the spring (35a) is so arranged that its spring power acts upon the first piston (12) ;

l) means are provided for adjusting the spring power of the spring (35a) becoming effective on the lever (15 or 18) in dependence on the brake control pressure ;

m) the means consist of an auxiliary piston (36a, 36b) which may be loaded by the brake control pressure.

2. Automatic load-controlled brake force regulator according to claim 1, characterised by the following feature : the brake control pressure opposes the spring power of the spring (35a).

3. Automatic load-controlled brake force regulator according to claim 1, characterised by the following feature : the brake control pressure acts in the same direction as the spring power of the spring (35a).

4. Automatic load-controlled brake force regulator according to claims 1, 2 or 3, characterised by the following feature : the auxiliary piston (36a, 36b) forms a support for the spring (35a), which support may be moved by means of an adjusting screw (37a).

5. Automatic load-controlled brake force regulator according to at least one of claims 1 to 4, characterised by the following feature : the auxiliary piston (36a, 36b) is provided at its outside diameter with an annular face (38 and 38a).

6. Automatic load-controlled brake force regulator according to claim 5, characterised by the following feature : the annular face (38) forms the lower face of an annular chamber (39) arranged between the auxiliary piston (36a) and the housing (34a).

7. Automatic load-controlled brake force regulator according to claim 5, characterised by the following feature : the annular face (38a) forms the upper face of an annular chamber (39a) arranged in the piston (36b) and the housing (34a).

8. Automatic load-controlled brake force regulator according to at least one of claims 1 to 7, characterised by the following feature : the annular chamber (39, 39a) is in communication with the brake pressure control chamber (4).

## Revendications

1. Régulateur automatique d'effort de freinage en fonction de la charge pour équipements de freinage de véhicule actionnés par un fluide sous pression, comprenant :

a) une entrée (5) pour la pression de commande du freinage ;

b) une sortie (10) pour la pression de freinage ;

c) une chambre (4) de commande de la pression de freinage, une soupape double constituée par une soupape d'admission (6, 7) et une soupape d'échappement (6, 9), et une chambre (8) de pression de freinage entre l'entrée (5) et la sortie (10) ;

d) un premier piston (12) pour actionner la soupape double (6, 7 et 6, 9) ;

e) la charge du premier piston (12) dans le sens de fermeture de la soupape d'admission (6, 7) par la pression de freinage ;

f) un second piston (2) chargé par la pression de commande du freinage ;

g) une tringlerie reliant le premier et le second piston (12 et 2) selon le principe du fléau de balance ;

h) un poussoir (17) coulissant en fonction de la charge, déterminant la longueur effective des deux leviers (15 et 18) de la tringlerie et les reliant par action de force, et caractérisé en ce que :

i) un ressort (35a) de force élastique ajustable agit sur un des leviers (15 ou 18) au moins ;

k) le ressort (35a) est disposé de façon que sa force élastique agisse sur le premier piston (12) ;

l) des moyens sont prévus pour ajuster, en fonction de la pression de commande du freinage, la force élastique du ressort (35a) agissant sur le levier (15 ou 18)

m) les moyens sont constitués par un piston auxiliaire (36a, 36b) chargé par la pression de commande du freinage.

2. Régulateur automatique d'effort de freinage en fonction de la charge selon revendication 1, caractérisé en ce que la pression de commande du freinage s'oppose à la force élastique du ressort (35a).

3. Régulateur automatique d'effort de freinage en fonction de la charge selon revendication 1, caractérisé en ce que la pression de commande du freinage agit dans le même sens que la force élastique du ressort (35a).

4. Régulateur automatique d'effort de freinage en fonction de la charge selon une des revendications 1, 2 ou 3, caractérisé en ce que le piston auxiliaire (36a, 36b) constitue pour le ressort (35a) un appui réglable à l'aide d'une vis d'ajustement (37a).

5. Régulateur automatique d'effort de freinage en fonction de la charge selon une quelconque des revendications 1 à 4, caractérisé en ce que le diamètre extérieur du piston auxiliaire (36a, 36b) présente une surface annulaire (38 ou 38a).

6. Régulateur automatique d'effort de freinage en fonction de la charge selon revendication 5, caractérisé en ce que la surface annulaire (38) forme la face inférieure d'une chambre annulaire (39) disposée entre le piston auxiliaire (36a) et le corps (34a).

7. Régulateur automatique d'effort de freinage en fonction de la charge selon revendication 5, caractérisé en ce que la surface annulaire (38a) constitue la face supérieure d'une chambre annulaire (39a) disposée entre le piston (36b) et le corps (34a).

8. Régulateur automatique d'effort de freinage en fonction de la charge selon une quelconque des revendications 1 à 7, caractérisé en ce que la chambre annulaire (39, 39a) est reliée à la chambre (4) de commande de la pression de freinage.

FIG.2

FIG.1

0 021 001

FIG. 3